# EUROPÄISCHE PATENTSCHRIFT

(11) **EP 1 899 637 B1**
(45) Veröffentlichungstag und Bekanntmachung des Hinweises auf die Patenterteilung: **11.03.2009**
(21) Anmeldenummer: 06764043.3
(22) Anmeldetag: 04.07.2006
(51) Int. Cl.: F16L 55/24, H02G 5/06

(54) **VERFAHREN ZUR WARTUNG EINES ROHRES MIT EINEM SICH LÄNGS DES ROHRES ERSTRECKENDEN TEILCHENFALLENSYSTEM SOWIE VORRICHTUNGEN ZUR DURCHFÜHRUNG DES VERFAHRENS**
METHOD FOR MAINTAINING A PIPE COMPRISING A PARTICLE TRAP SYSTEM EXTENDING ALONG THE PIPE, AND DEVICES FOR CARRYING OUT THE METHOD
PROCEDE POUR ENTRETENIR UN TUYAU COMPORTANT UN SYSTEME DE PIEGES A PARTICULES QUI S'ETEND LE LONG DU TUYAU, ET DISPOSITIFS SERVANT A LA MISE EN OEUVRE DE CE PROCEDE

(30) Priorität: 07.07.2005 DE 102005032710
(43) Veröffentlichungstag der Anmeldung: 19.03.2008
(73) Patentinhaber: SIEMENS AKTIENGESELLSCHAFT, 80333 München (DE)
(72) Erfinder: KOCH, Hermann, 91466 Gerhardshofen (DE)
(86) Internationale Anmeldenummer: PCT/EP2006/063841
(87) Internationale Veröffentlichungsnummer: WO 2007/006685

(56) Entgegenhaltungen:
- EP-A1- 0 519 228
- GB-A- 2 227 542
- US-A- 1 349 684
- US-A- 4 444 993
- US-A- 5 558 882

## Beschreibung

Die Erfindung bezieht sich auf ein Verfahren zum Warten eines Rohres mit einem sich längs des Rohres erstreckenden Teilchenfallensystem, sowie auf Vorrichtungen zur Durchführung des Verfahrens.

Ein zu wartendes Rohr ist beispielsweise ein Mantelrohr einer gasisolierten Leitung.
Das Mantelrohr umgibt einen Stromleiter, der mittels Stützisolatoren gehalten ist. Weiterhin ist zur Isolierung des Stromleiters das Mantelrohr mit einem geeigneten Gas, z.B. SF₆, befüllt. Teilchen, insbesondere Metallpartikel, die z.B. bei der Montage in das Innere des Mantelrohres gelangen, können sich bei Spannungsbeaufschlagung des Stromleiters in dem hierdurch entstandenen elektrischen Feld bewegen und durch diese Bewegung die Isolation zwischen Mantelrohr und Stromleiter beeinträchtigen. Die Teilchen können sich auch an den Stützisolatoren anlagern und einen Durchschlag längs einer Stützisolatoroberfläche verursachen. Zum Aufnehmen der Teilchen sind in den Mantelrohren Gasisolierter Leitungen Teilchenfallensysteme angeordnet.

Aus der europäischen Patentschrift EP 0 519 228 B1 ist beispielsweise bekannt, ein Teilchenfallensystem mit einem Schutzbelag auszustatten, der Teilchen an seiner Oberfläche dielektrisch bindet.
Der Schutzbelag wird im Inneren des Rohres auf geeignete Oberflächenbereiche aufgetragen, wobei die oberste Schicht des Schutzbelages als Folie ausgebildet ist. Bei einer Wartung wird die Folie mit den daran haftenden Teilchen manuell entfernt. Die Entfernung derartiger Folien ist auf leicht zugängliche Bereiche, d.h. in der Nähe von Öffnungen usw. eingeschränkt. Weiterhin besteht bei der Entfernung der Folie die Gefahr, dass sich Teilchen lösen bzw. neue Fremdpartikel in das Rohr eingebracht werden.
Zur Erhöhung der Betriebssicherheit ist es wünschenswert, auch erschwert zugängliche Rohrabschnitte zu erreichen und bei der Entfernung der Teilchen keine neuen Fremdpartikel in das Rohr einzubringen.

Der Erfindung liegt die Aufgabe zugrunde, ein Verfahren zur Wartung eines Rohres anzugeben, mit welchem schwer zugängliche Abschnitte zu Wartungszwecken einfach zu erreichen sind.

Die Aufgabe wird erfindungsgemäß bei einem Verfahren der eingangs genannten Art dadurch gelöst, dass ein Wartungsapparat längs des Teilchenfallensystems bewegt wird und das Teilchenfallensystem den Wartungsapparat führt.

Unter einer Wartung wird beispielsweise eine Inspektion und/oder Reinigung von Teilchenfallensystemen verstanden. Wartungen können beispielsweise während einer Errichtung einer Anlage, vor Inbetriebsetzung einer Anlage oder auch im Verlauf des Lebenszyklus einer Anlage erfolgen.

Einen Wartungsapparat in das Rohr einzubringen und mittels des Teilchenfallensystems zu führen bietet den Vorteil, dass Wartungsarbeiten in Rohrabschnitten von mehreren Kilometern Länge durchgeführt werden können. Mit den bisher üblichen manuellen Methoden ist dies nicht möglich. Der Innenleiter und die Stützisolatoren müssen für die Wartungsarbeiten nicht aus dem Rohr entfernt werden, da der Wartungsapparat durch die Führung mittels Teilchenfallensystem sicher um die Auflagepunkte der Stützisolatoren geführt wird. Das Teilchenfallensystem als Führungssystem zu nutzen bietet den weiteren Vorteil, dass Bezugspunkte längs des Rohres vorhanden sind, die nicht zusätzlich installiert werden müssen. Der Wartungsapparat wird nah an den Gebieten geführt, an denen sich bevorzugt Teilchen ansammeln.

Es kann vorteilhaft vorgesehen sein, dass zur Führung des Wartungsapparates eine Erfassungseinrichtung das Teilchenfallensystem erfasst.

Die Erfassungseinrichtung kann direkt am Wartungsapparat angeordnet sein oder sich von diesem beabstandet am Rohr befinden. Die Erfassungseinrichtung kann das Teilchenfallensystem z.B. unter Nutzung optischer, akustischer oder elektromagnetischer Signale erfassen. Beispielhaft sei eine Erfassungseinrichtung angeführt, die eine spezielle Farbgebung des Teilchenfallensystems detektiert. Bei großen Abständen zwischen einzelnen Teilchenfallen eines Teilchenfallensystems können akustische Signale, die von einem Sender an jeder Teilchenfalle ausgestrahlt werden, mittels einer Frequenzfolge der Erfassungseinrichtung Lage und Abfolge der Teilchenfallen mitteilen. Ein Teilchenfallensystem, welches aus einzelnen beabstandeten Teilchenfallen besteht, kann von einer Erfassungseinrichtung beispielsweise unter Nutzung statischer Felder erfasst werden, deren Feldlinien von einer Teilchenfalle zur nächsten weisen. Ein solcher Feldlinienverlauf kann erzeugt werden, indem an jeder Teilchenfalle ein elektrisch isoliertes Element mit einem von Teilchenfalle zu Teilchenfalle alternierenden elektrischen Potential beaufschlagt wird. Eine weitere Möglichkeit zur Erfassung des Teilchenfallensystems durch die Erfassungseinrichtung besteht darin, dass die Erfassungseinrichtung ein Seil abtastet, welches entlang des Teilchenfallensystems gespannt ist. Eine andere Methode zur Erfassung des Teilchenfallensystems kann vorsehen, dass die Erfassungseinrichtung eine Spur auf der Rohrinnenfläche nutzt, die am Teilchenfallensystem orientiert ist. Bei der Spur kann es sich um einen Farbauftrag handeln oder allgemein um einen Belag mit Oberflächeneigenschaften, der sich von den Oberflächeneigenschaften der Rohrinnenfläche unterscheiden. Die Erfassungseinrichtung reagiert auf diesen Unterschied.

Es kann auch als vorteilhaft angesehen werden, dass eine längs des Rohres fortlaufend angeordnete Ausformung des Teilchenfallensystems erfasst wird.

Ein solches Teilchenfallensystem kann sich entlang einer gedachten Linie auf der Mantelrohrinnenfläche erstrecken und z.B. aus einzelnen Vertiefungen, Erhebungen oder Kombinationen daraus bestehen. Die Abstände zwischen den einzelnen Teilchenfallen können regelmäßig oder unregelmäßig sein. Ebenso können sich die Teilchenfallen nur in der Nähe der gedachten Linie befinden oder dieser genau folgen. Die Abfolge einzelner Gruppen von Teilchenfallen entlang eines Weges, z.B. pilzförmige Erhebungen an der Rohrinnenfläche, ist ebenfalls denkbar. All diese fortlaufend angeordneten Ausformungen des Teilchenfallensystems können vorteilhafterweise den Wartungsapparat entlang eines kurzen Weges - nämlich der gedachten Linie - durch das Rohr entlang aller Teilchenfallen führen.

Eine weitere vorteilhafte Ausgestaltung des Verfahrens kann vorsehen, dass die erfasste fortlaufend angeordnete Ausformung des Teilchenfallensystems durch mindestens ein strangförmiges Element gebildet wird.

Das strangförmige Element wird durch einen dreidimensionalen, zusammenhängenden Körper gebildet, der in Längsrichtung eine größere Ausdehnung aufweist als in Querrichtung. Der Körper braucht keine streng lineare Ausdehnung aufzuweisen, sondern kann entlang einer gewundenen Kurve ausgebildet sein. Auch kann der Körper eine Torsion aufweisen. Das strangförmige Element kann aber auch durch eine Aussparung in einer Wandung des Rohres in Form des oben beschriebenen Körpers gebildet sein oder aus einer Kombination von beiden. Das strangförmige Element kann sich über die gesamte Länge des Rohres erstrecken. Handelt es sich um mehrere strangförmige Elemente, können diese stirnseitig beabstandet oder aneinanderstoßend abfolgen. Der Querschnitt des strangförmigen Elementes ist nicht zwangsläufig konstant, bildet aber durch seine Ausformung feldfreie Räume und kann vorteilhafte Einrichtungen zur Beeinflussung des Feldverlaufes aufweisen. Auch können Formgebungen, die einen sicheren Verbleib der Teilchen in den Teilchenfallen gewährleisten, vorhanden sein. Eine nachträgliche Installation der strangförmigen Elemente am Rohr kann entfallen, wenn diese direkt bei der Herstellung des Rohres angeformt werden. Die strangförmigen Elemente können aber auch später, z.B. als schmale, lange Metallplatten mittels Punktschweißung im Rohr fixiert werden. Die strangförmigen Elemente erlauben aufgrund ihrer stetigen Ausformung eine kontinuierliche Erfassung durch die Erfassungseinrichtung und dadurch eine sichere Führung des Wartungsapparates entlang des Teilchenfallensystems.

Es kann auch als vorteilhaft angesehen werden, dass die strangförmigen Elemente stegförmig ausgebildet sind.

Ein stegförmiges Element weist zumindest einen Steg auf, der eine angrenzende Fläche überragt und durch ein strangförmiges Element gebildet ist. Das stegförmige Element kann einstückig mit dem Rohr verbunden sein. Der Querschnitt der Erhebungsform kann z.B. T-förmig oder kreisförmig ausgebildet sein. Das stegförmige Element kann aber auch an der Rohrinnenfläche anliegen. Diese Ausführungsform lässt sich nachträglich leicht in den Rohren installieren. Es kann sich z.B. um Metallrohre handeln, die in dem unteren Bereich des Rohres entlang einer Linie eingelegt werden. Wichtig ist dabei, dass aufgrund einer Formgebung ein feldfreier Raum erzeugt wird, der zum Innenraum des Rohres eine Verbindung aufweist.

Vorteilhafter Weise kann weiter vorgesehen sein, dass das Teilchenfallensystem nutförmig ausgebildet ist.

Durch eine ausreichende Tiefe der Nut ist eine hohe Wahrscheinlichkeit gegeben, dass Teilchen in den feldfreien Räumen der Vertiefung verbleiben. An der Nut können im Bereich des Einganges Vorsprünge angeordnet sein, die den Eingang trichterförmig verkleinern. Dadurch wird ein Zurückwandern der Teilchen in den Innenraum des Rohres erschwert.

Es kann vorteilhaft vorgesehen sein, dass die Erfassungseinrichtung mit dem Teilchenfallensystem in physischem Kontakt steht.

Beispielhaft sei hier eine Ausnehmung am Wartungsapparat angeführt, welche ein stegförmiges Teilchenfallensystem umgreift. Eine weitere Ausführungsform einer Erfassungseinrichtung ist ein Greifarm. Dieser ist an seinem oberen Ende so ausgeformt, das er nach einem Schlüssel-Schloss Prinzip an den hierfür vorgesehenen Stellen der Teilchenfallen angekoppelt werden kann. Der Greifarm ist durch ein Gelenk am Wartungsapparat befestigt und besteht aus einer Aneinanderreihung von Verbindungsstücken und Gelenken, die mittels einer Steuerung so im Raum ausgerichtet werden können, dass der Greifarm innerhalb seiner Reichweite die Umgebung nach den Teilchenfallen absuchen kann. Die Erfassungseinrichtung kann zusätzlich als Fortbewegungsmittel des Wartungsapparates konzipiert sein. So kann der Wartungsapparat beispielsweise durch Einziehen des angekoppelten Greifarmes fortbewegt werden. Eine andere Variante nutzt ein Zahnrad, welches beim Abrollen in eine dafür vorgesehene Struktur am Teilchenfallensystem greift. Um das Teilchenfallensystem zu erfassen, kann die Erfassungseinrichtung auch als passiver Abstandshalter ausgebildet sein. Es kann sich dabei um einen Bügel handeln, der als Verbindungsstück eine bogenförmige Krümmung aufweist und mit dieser an einer Fläche oder Körperkante des Teilchenfallensystems anliegt oder verbunden ist. Der Bügel kann an einer zwischen den Teilchenfallen angeordneten Hilfskonstruktion, wie beispielsweise einem gespannten Seil, entlang gleiten.
Entlang strangförmiger Elemente kann der Wartungsapparat mittels Rollen geführt werden, die bei der abrollenden Bewegung vorteilhaft wenige Abriebpartikel erzeugen. Die Rollen können aus hartem Kunststoff bestehen und derart am Wartungsapparat angebracht sein, dass sie beidseitig gegen das strangförmige Element gepresst werden. Dadurch ergibt sich eine seitliche Führung des Wartungsapparates entlang des strangförmigen Elements.

Eine weitere Aufgabe der Erfindung ist, einen geeigneten Wartungsapparat zur Durchführung des Verfahrens anzugeben.

Eine vorteilhafte Ausgestaltung des Wartungsapparates zur Durchführung des Verfahrens kann vorsehen, dass am Wartungsapparat Reinigungselemente angebracht sind, welche Teilchen auf chemische und/oder mechanische Art und/oder mittels Druck und/oder mittels elektrischer und/oder magnetischer Felder aus einer Teilchenfalle des Teilchenfallensystems lösen und/oder transportieren.

Bei den Reinigungselementen kann es sich z.B. um rotierende Bürsten handeln, die mit einem Lösungsmittel benetzt sind oder um eine Gummilippe, die entlang der Teilchenfalle geführt wird. Die Gummilippe kann die Teilchen in die Nähe eines Saugrohres schieben oder das Saugrohr kann so ausgebildet sein, das es die Teilchen direkt aus der Falle saugt. Es sind auch Reinigungselemente denkbar, die mittels Ultraschall die Teilchen lösen und anschließend einsaugen. Bei schwer zugänglichen Teilchenfallen-Typen kann eine Sonde als Reinigungselement genutzt werden. Bei der Sonde kann es sich um einen dünnen Metallstift handeln, der das Innere der Teilchenfallen erreicht und am Ende eine Spitze aufweist, die mit einem geeigneten elektrischen Potential beaufschlagt ist. Die hohen Feldstärken an der Spitze können Teilchen zur Spitze ziehen und zusammen mit der Sonde aus der Falle entfernt werden.

Weiter kann vorteilhaft vorgesehen sein, eine optische Erfassungseinrichtung zur Kontrolle eines Wartungsabschnittes am Wartungsapparat mitzuführen.

Es kann sich dabei z.B. um eine Videokamera handeln, die am Wartungsapparat schwenkbar angebracht ist und während der Fahrt entlang des Rohres den gewarteten Bereich innerhalb ihres Sichtfeldes aufzeichnet. Werden bei dieser Kontrolle noch verbleibende Teilchen oder eventuell durch die Wartung neu eingebrachte Teilchen im Bereich des Teilchenfallensystems entdeckt, kann die Wartung gegebenenfalls wiederholt werden. Durch diese Maßnahme wird die Betriebssicherheit der Anlage verbessert.

Es kann vorteilhafterweise vorgesehen sein, dass im Rohr Führungselemente am Teilchenfallensystem angeordnet sind.

Bei den Führungselementen handelt es sich um Strukturen am Teilchenfallensystem, die mit Erfassungseinrichtungen zusammenwirken. Beispielsweise können pyramidenförmige Zacken entlang des Teilchenfallensystems angeordnet sein, die mit einem Zahnrad zusammenwirken. Zur Funktion des Teilchenfallensystems nötige Ausgestaltungen können mitgenutzt werden. Eine Ausbuchtung am Teilchenfallensystem, an der Erfassungseinrichtungen entlang gleiten können und die gleichzeitig einen feldfreien Raum bildet, ist ein Ausführungsbeispiel für ein Führungselement, das einen wesentlichen Teil des Teilchenfallensystems bildet.

Im Folgenden wird die Erfindung anhand eines Ausführungsbeispiels schematisch in einer Zeichnung gezeigt und nachfolgend beschrieben.

Dabei zeigt die
- Fig.1: einen freigeschnittenen Leitungsabschnitt einer gasisolierten Hochspannungsleitung , die
- Fig.2: einen Ausschnitt einer gasisolierten Hochspannungsleitung in einem Querschnitt, und die
- Fig.3: ein Detail des Leitungsabschnittes in einer Seitenansicht.

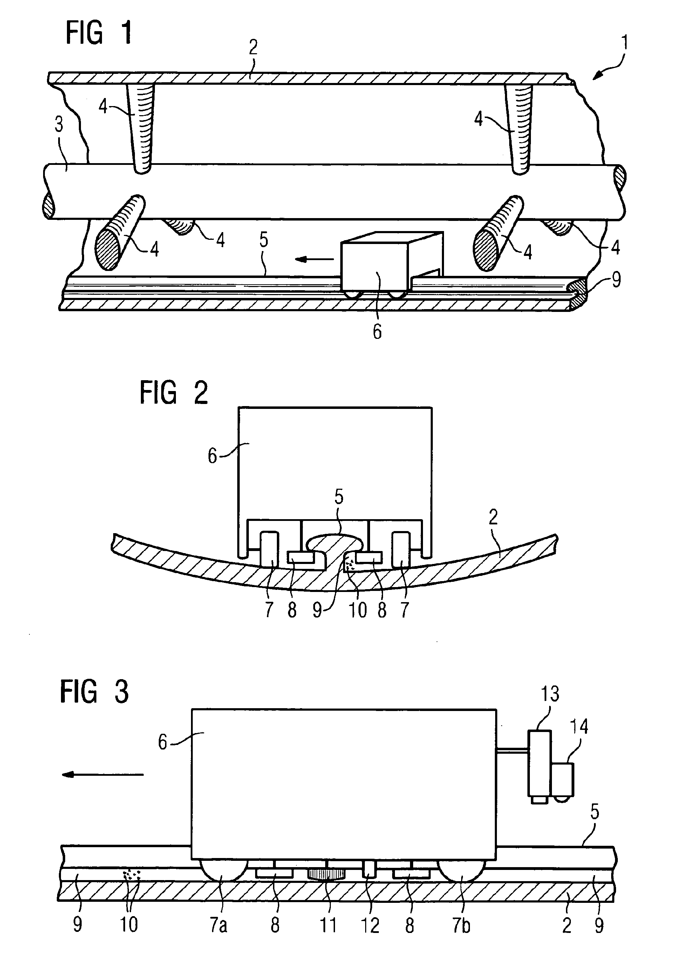

Eine Hochspannungsleitung 1 weist einen sich entlang einer Achse erstreckenden elektrischen Leiter 3 auf, welcher koaxial von einem Mantelrohr 2 umgeben ist. Der elektrische Leiter 3 wird durch säulenförmige Stützisolatoren 4 innerhalb des Mantelrohres 2 gehalten. Der elektrische Leiter 3 dient der Führung eines elektrischen Stromes und wird im Betriebszustand der Anlage mit einem Hochspannungspotential beaufschlagt. Das Mantelrohr 2 besteht beispielsweise aus einem elektrisch leitenden Material, z.B. Aluminium, und ist mit Erdpotential verbunden. Im Betriebszustand ist das Mantelrohr 2 verschlossen und mit einem geeigneten Isoliergas befüllt. Zur Verbesserung der Isolationsfestigkeit weist das Gas einen erhöhten Druck auf. Die Stützisolatoren 4 sind entlang des elektrischen Leiters 3 in regelmäßigen Abständen angeordnet. Die Stützisolatoren 4 sind säulenförmig ausgeformt und erstrecken sich in radialer Richtung zwischen elektrischem Leiter 3 und dem Mantelrohr 2. In dem in der Fig.1 gezeigten Beispiel sind die Stützisolatoren 4 jeweils in Dreier-Gruppen um den elektrischen Leiter 3 so angeordnet, dass je zwei Stützisolatoren den unteren Bereich des horizontal verlaufenden Rohres überspannen. In diesem unteren Bereich des Rohres verläuft ein Teilchenfallensystem 5. Das in der Fig. 1 gezeigte Ausführungsbeispiel eines Teilchenfallensystems 5 wird durch eine an dem Mantelrohr 2 anliegende stegförmige Erhebung gebildet, die sich unterbrechungsfrei entlang des Mantelrohres 2 erstreckt und einen T-förmigen Querschnitt (siehe Fig.2) aufweist. Eine Teilchenfalle dieser Bauart weist eine elektrisch leitende Oberfläche auf. Ist der elektrische Leiter 3 im Betriebszustand mit einer Gleich- oder Wechselspannung beaufschlagt, so ist der elektrische Leiter 3 von einem elektrischen Feld umgeben. Die Teilchenfallenoberflächen weisen ein gemeinsames elektrisches Potential auf. Im Bereich von Einbuchtungen der Teilchenfallenoberfläche entstehen so feldfreie Räume. Das in Fig.1 dargestellte stegförmige Teilchenfallensystem 5 mit T-förmigem Querschnitt (siehe Fig.2) ist mit dem Mantelrohr 2 elektrisch leitend verbunden und weist bezüglich der Achse beidseitig der Erhebung Einbuchtungen auf, die feldfreie Räume ausbilden. Die Einbuchtungen bilden längs des Rohres verlaufende Nuten. Teilchen, die sich bei Spannungsbeaufschlagung des elektrischen Leiters 3 im Mantelrohr 2 befinden, können durch das entstandene elektrisches Feld in Bewegung geraten. Unter dem zusätzlichen Einfluss der Schwerkraft vollführen die Teilchen eine im Mittel in Richtung des unteren Bereiches des Mantelrohres gelenkte Bewegung. Vorzugsweise werden in dem unteren Bereich die Teilchenfallen angeordnet, damit Teilchen in die feldfreien Räume gelangen und mit hoher Wahrscheinlichkeit in diesen verbleiben. Andernfalls könnten die im elektrischen Feld unkontrolliert umherwandernden Teilchen zu Teilentladungen führen.
Da nicht auszuschließen ist, dass bereits in den Teilchenfallen befindliche Teilchen aus diesen wieder entweichen, ist es wünschenswert, die Teilchenfallen zu warten. Die angesammelten Teilchen können von einem Wartungsapparat 6 aufgenommen werden, der entlang des Teilchenfallensystems 5 fährt. Wie in Fig.1 dargestellt, kann der Wartungsapparat hierzu auf das Teilchenfallensystem aufgesetzt werden. Die in Fig.1 dargestellten Stützisolatoren 4, die den unteren Bereich des horizontal verlaufenden Mantelrohres 2 überspannen, lassen genügend Raum, damit der auf das Teilchenfallensystem 5 aufgesetzte Wartungsapparat 6 unter den Stützisolatoren 4 hindurch fahren kann. Der Wartungsapparat 6 kann einen Vortriebsmechanismus aufweisen. Beispielsweise kann es sich um einen batteriebetriebenen Elektromotor handeln, der Räder 7 am Wartungsapparat antreibt. Der Wartungsapparat 6 kann aber auch extern angetrieben werden. Beispielsweise kann der Wartungsapparat 6 mittels eines in Fig.1 nicht dargestellten Seilzuges durch den zu wartenden Leitungsabschnitt entlang des stegförmigen Teilchenfallensystems 5 gezogen werden. Damit der Wartungsapparat entlang des Teilchenfallensystem 5 fährt, kann er Erfassungseinrichtungen aufweisen. Diese wirken mit dem Teilchenfallensystem 5 zusammen. An dem Teilchenfallensystem 5 können sich zusätzlich Führungselemente befinden, beispielsweise eine besondere Profilierung, die mit den Erfassungseinrichtungen zusammenwirken. Der Wartungsapparat 6 weist als Erfassungseinrichtungen Rollen 8 auf, die im physischen Kontakt mit den strangförmigen Elementen des Teilchenfallensystems 5 stehen und entlang dieser eine abrollende Bewegung ausführen. Bei dem Teilchenfallensystem 5 kann es sich um eine hier nicht gezeigte Aneinanderreihung strangförmiger Elemente handeln, die voneinander beabstandet sind. Je nach der Größe dieser Abstände bieten sich unterschiedliche Erfassungseinrichtungen an. Beispielsweise können die am Wartungsapparat angebrachten Rollen 8 bei ihrer abrollenden Bewegung entlang der strangförmigen Elemente Abstände überbrücken. Bei größeren Abständen der strangförmigen Elemente kann der Wartungsapparat 6 z.B. mittels einer oder zweier länglicher Kufen geführt werden, die an dem Wartungsapparat angebracht sind und an dem strangförmigen Element ein- oder beidseitig anliegend entlang gleiten. Bei noch größeren Abständen können zwischen den strangförmigen Elementen Führungselemente angeordnet sein, die der Erfassungseinrichtung die Richtung weisen. Es können Führungselemente am Teilchenfallensystem vorgesehen sein, die beabstandete Teilchenfallen miteinander verbinden. Beispielsweise ein zwischen den Teilchenfallen gespanntes Seil oder eine Spur auf der Rohrinnenfläche. Bei den Führungselementen kann es sich aber auch um Strukturen an den Teilchenfallen handeln. Beispielsweise eine spezielle Farbgebung der Teilchenfallen, die von der Erfassungseinrichtung detektiert wird.

Fig.2 zeigt den unteren Bereich der horizontal verlaufenden Hochspannungsleitung im Querschnitt. Das stegförmige Teilchenfallensystem 5 weist einen T-förmigen Querschnitt auf. Der Wartungsapparat 6 ist auf das Teilchenfallensystem 5 aufgesetzt. Der Wartungsapparat 6 weist ein Fahrwerk auf. Bei dem in Fig.2 abgebildeten Wartungsapparat 6 wird das Fahrwerk durch stegförmige Verlängerungen der unteren Längskanten gebildet, die Achsen der Räder 7 aufnehmen. An dem Wartungsapparat können auch weitere Vorrichtungen angeordnet sein. In Fig. 2 sind an der der Teilchenfalle zugewandten Seite des Wartungsapparates 6 Führungsrollen 8 angeordnet, die als Erfassungseinrichtung wirken. Die Führungsrollen 8 greifen hierzu in das Profil des stegförmigen Teilchenfallensystems. Während die Führungsrollen 8 die Bewegung des Wartungswagens 6 auf den Verlauf der stegförmigen Teilchenfalle einschränken, ermöglichen die (z.B. von einem Elektromotor) angetriebenen Räder 7 des Wartungsapparat 6 eine Fortbewegung entlang des Teilchenfallensystems 5. Im Folgenden seien weitere nicht gezeigte Erfassungseinrichtungen genannt, die mittels physischem Kontakt ein Teilchenfallensystem erfassen können. Beispielsweise können die Führungsrollen 8 durch Bürsten ersetzt werden, die einerseits als Reinigungselemente wirken, andererseits eine ausreichende Formstabilität aufweisen um als Erfassungseinrichtung dienen zu können. Eine andere Ausführungsform sieht vor, die Rollen durch Bügel zu ersetzen, die mit einem gebogenen Bereich unter das Profil des stegförmigen Teilchenfallensystems greifen und an diesem entlang gleiten. Eine andere Ausführungsform sieht vor, den Bügel aus einem formstabilen Saugrohr zu bilden, so dass das Saugrohr einerseits als Reinigungselement und andererseits als Erfassungseinrichtung wirkt. Ist das Teilchenfallensystem als nutförmige Ausnehmung in einer Wandung des Mantelrohres 2 ausgebildet, kann als Erfassungseinrichtung ein steg- oder zapfenförmiges Element genutzt werden, welches passgenau in die Nut eingreift. Die oben beschriebenen Erfassungseinrichtungen können in Abwandlung ebenfalls verwendet werden. Die Erfassungseinrichtungen müssen dazu in ein entsprechendes Profil der Nut greifen bzw. so an einer Innenwand der Nut anliegen, dass eine Führung des Wartungsapparates entlang des Teilchenfallensystems möglich ist.

Fig.3 zeigt einen freigeschnittenen Leitungsabschnitt einer gasisolierten Leitung 1 in Seitenansicht. Der Ausschnitt zeigt den unteren Bereich des horizontal verlaufenden Mantelrohres 2 mit dem Wartungswagen 6 in Zusammenwirkung mit der stegförmigen Teilchenfalle 5 in Seitenansicht. Von den beiden feldfreien Räumen 9, die sich beidseitig des T-förmigen Querschnitts (siehe auch Fig.2) des Teilchenfallensystems 5 befinden, ist einer der beiden feldfreien Räume 9 in Seitenansicht in der Fig.3 dargestellt. Schematisch sind angesammelte Teilchen 10 in dem feldfreien Raum 9 in der Fig.3 eingezeichnet. Auf das Teilchenfallensystem 5 ist der Wartungsapparat 6 aufgesetzt, dessen Fahrwerk vier Räder 7 aufweist, von denen zwei in der Fig.3 abgebildet sind. Die Räder 7 liegen beidseitig des stegförmigen Teilchenfallensystems 5 auf dem Mantelrohr 2 auf. Die Führung des Wartungsapparates 6 entlang des Teilchenfallensystems 5 wird durch die Erfassungseinrichtung erzeugt. In Fig.3 sind als Erfassungseinrichtung Führungsrollen 8 am Wartungsapparat 6 angebracht, die unter das Profil der stegförmigen Teilchenfalle greifen. In dem in Fig.3 dargestellten Ausführungsbeispiel sind Reinigungselemente unter dem Wartungsapparat angeordnet. Neben der Führungsrolle 8 ist eine als Reinigungselement wirkende rotierende Bürste 11 angeordnet, die mit Reinigungsmittel, z.B. Aceton, benetzt sein kann. Die rotierende Bürste löst Teilchen 10 aus den feldfreien Räumen 9 und schleudert sie in Richtung eines als Reinigungselement wirkendes Saugrohres. Die Bürste 11 wird mit einer geeigneten Geschwindigkeit gedreht, so dass gelöste Teilchen nicht an dem Saugrohr 12 vorbeigeschleudert werden. Bei dem Absaugen kann das aufgebrachte Reinigungsmittel wieder aufgenommen werden. Die Reinigungselemente können beidseitig des Teilchenfallensystems 5 am Wartungsapparat 6 angebracht sein. Zur Kontrolle des Wartungsvorganges ist am Wagen eine Videokamera 13 und eine Leuchte 14 so schwenkbar angeordnet, dass der im Erfassungsbereich der Videokamera liegende feldfreie Raum ausgeleuchtet ist und aufgezeichnet werden kann.

## Patentansprüche

1. Verfahren zur Wartung eines Rohres (1) mit einem sich längs des Rohres (1) erstreckenden Teilchenfallensystem (5),
**dadurch gekennzeichnet, dass**
- ein Wartungsapparat (6) längs des Teilchenfallensystems (5) bewegt wird und
- das Teilchenfallensystem (5) den Wartungsapparat (6) führt.

2. Verfahren zur Wartung eines Rohres (1) nach Anspruch 1,
**dadurch gekennzeichnet, dass**
zur Führung des Wartungsapparates (6) eine Erfassungseinrichtung (8) das Teilchenfallensystem (5) erfasst.

3. Verfahren zur Wartung eines Rohres (1) nach Anspruch 2,
**dadurch gekennzeichnet, dass**
eine längs des Rohres (1) fortlaufend angeordnete Ausformung des Teilchenfallensystems (5) erfasst wird.

4. Verfahren zur Wartung eines Rohres (1) nach Anspruch 3,
**dadurch gekennzeichnet, dass**
die fortlaufend angeordnete Ausformung durch mindestens ein strangförmiges Element (5) gebildet wird.

5. Verfahren zur Wartung eines Rohres (1) nach Anspruch 4,
**dadurch gekennzeichnet, dass**
das strangförmige Element (5) eine die Innenwand des Kapselungsrohres (2) überragende stegförmige Erhebung aufweist.

6. Verfahren zur Wartung eines Rohres (1) nach einem der Ansprüche 3 oder 4,
**dadurch gekennzeichnet, dass**
das strangförmige Element nutförmig ausgebildet ist.

7. Verfahren zur Wartung eines Rohres (1) nach einem der Ansprüche 2 bis 6,
**dadurch gekennzeichnet, dass**
die Erfassungseinrichtung (8) mit dem Teilchenfallensystem (5) in physischem Kontakt steht.

8. Wartungsapparat(6) zur Durchführung des Verfahrens nach einem der Ansprüchen 1 bis 7,
**dadurch gekennzeichnet, dass**
am Wartungsapparat (6) Reinigungselemente (11,12) angebracht sind, welche Teilchen auf chemische und/oder mechanische Art und/oder mittels Druck und/oder mittels elektrischer und/oder magnetischer Felder aus einer Teilchenfalle (5) des Teilchenfallensystems lösen und/oder transportieren.

9. Wartungsapparat nach Anspruch 8,
**dadurch gekennzeichnet, dass**
eine optische Erfassungsvorrichtung (13) zur Kontrolle eines Wartungsabschnittes am Wartungsapparat (6) mitgeführt wird.

## Claims

1. Method for maintaining a pipe (1) comprising a particle trap system (5) extending along the pipe (1), **characterized in that**
- a maintenance unit (6) is moved along the particle trap system (5) and
- the particle trap system (5) guides the maintenance unit (6).

2. Method for maintaining a pipe (1) according to Claim 1, **characterized in that** the maintenance unit (6) is guided by a detection means (8) detecting the particle trap system (5).

3. Method for maintaining a pipe (1) according to Claim 2, **characterized in that** a shape of the particle trap system (5) arranged continuously along the pipe (1) is detected.

4. Method for maintaining a pipe (1) according to Claim 3, **characterized in that** the continuously arranged shape is formed by at least one strand-type element (5).

5. Method for maintaining a pipe (1) according to Claim 4, **characterized in that** the strand-type element (5) comprises a web-type raised portion projecting beyond the internal wall of the encapsulating pipe (2).

6. Method for maintaining a pipe (1) according to one of Claims 3 or 4, **characterized in that** the strand-type element takes the form of a channel.

7. Method for maintaining a pipe (1) according to one of Claims 2 to 6, **characterized in that** the detection means (8) is in physical contact with the particle trap system (5).

8. Maintenance unit (6) for carrying out the method according to one of Claims 1 to 7, **characterized in that** cleaning elements (11, 12) are attached to the maintenance unit (6), these detaching and/or transporting particles chemically and/or mechanically and/or by means of pressure and/or by means of electrical and/or magnetic fields from a particle trap (5) of the particle trap system.

9. Maintenance unit according to Claim 8, **characterized in that** an optical detection device (13) is carried along on the maintenance unit (6) for monitoring a maintenance portion.

## Revendications

1. Procédé d'entretien d'un tuyau (1) comprenant un système (5) de piège à particules s'étendant le long du tuyau (1), **caractérisé en ce que**
- on déplace un équipement (6) d'entretien le long du système (5) de piège à particules et
- le système (5) de piège à particules guide l'équipement (6) d'entretien.

2. Procédé d'entretien d'un tuyau (1) suivant la revendication 1,
**caractérisé**
**en ce que** pour guider l'équipement (6) d'entretien, un dispositif (8) de détection détecte le système (5) de piège à particules.

3. Procédé d'entretien d'un tuyau suivant la revendication 2,
**caractérisé**
**en ce qu'**on détecte une déformation du système (5) de piège à particules, disposée de manière continue le long du tuyau (1).

4. Procédé d'entretien d'un tuyau suivant la revendication 3,
**caractérisé**
**en ce qu'**on forme la déformation disposée de manière continue par au moins un élément (5) en forme de barre.

5. Procédé d'entretien d'un tuyau suivant la revendication 4,
**caractérisé**
**en ce que** l'élément (5) en forme de barre a une surélévation en forme de nervure dépassant la paroi intérieure du tuyau (2) d'encapsulation.

6. Procédé d'entretien d'un tuyau suivant l'une des revendications 3 ou 4,
**caractérisé**
**en ce que** l'élément en forme de barre est constitué sous la forme d'une rainure.

7. Procédé d'entretien d'un tuyau suivant l'une des revendications 2 à 6,
**caractérisé**
**en ce que** le dispositif (8) de détection est en contact physique avec le système (5) de piège à particules.

8. Equipement (6) d'entretien pour la mise en oeuvre du procédé suivant l'une des revendications 1 à 7,
**caractérisé**
**en ce que** sur l'équipement (6) d'entretien sont mis des éléments (12) de nettoyage, qui détachent d'un piège (5) à particules du système de piège à particules des particules de façon chimique et/ou mécanique et/ou au moyen d'une pression et/ou au moyen de champs électriques et/ou magnétiques et/ou les en transportent.

9. Equipement d'entretien suivant la revendication 8,
**caractérisé**
**en ce qu'**un dispositif (13) de détection optique pour le contrôle d'une partie d'entretien est guidé en étant entraîné avec l'équipement (6) d'entretien.
